# EUROPEAN PATENT SPECIFICATION

(11) **EP 0 808 526 B1**
(45) Date of publication and mention of the grant of the patent: **20.01.1999**
(21) Application number: 96901924.9
(22) Date of filing: 08.02.1996
(51) Int. Cl.: H02K 7/02, H02K 1/27

(54) **AN ENERGY STORAGE AND CONVERSION APPARATUS**
VORRICHTUNG ZUM SPEICHERN UND UMWANDELN VON ENERGIE
APPAREIL DE STOCKAGE ET DE TRANSFORMATION D'ENERGIE

(30) Priority: 09.02.1995 GB 9502501
(43) Date of publication of application: 26.11.1997
(73) Proprietor: British Nuclear Fuels PLC, Risley Warrington Cheshire, WA3 6AS (GB)
(72) Inventor: CROMBIE, Ian, Capenhurst Chester CH1 6ER (GB)
(74) Representative: Jackson, Richard Eric
(86) International application number: GB9600281
(87) International publication number: WO9624980

(56) References cited:
- EP-A- 0 669 699
- WO-A-95/02271
- US-A- 3 683 216
- US-A- 4 668 885
- PATENT ABSTRACTS OF JAPAN vol. 009, no. 047 (E-299) 27 February 1985 & JP,A,59 188 364 (MATSUSHITA DENKI SANGYO KK) 25 October 1984
- PATENT ABSTRACTS OF JAPAN vol. 011, no. 379 (C-463) 10 December 1987 & JP,A,62 149 756 (MITSUBISHI METAL CORP) 03 July 1987

## Description

This invention relates to energy storage and conversion apparatus, and in particular to such apparatus which incorporate a flux shield to assist in reducing unwanted energy losses.

Flywheels are well known devices which can receive and store energy as kinetic energy and can release energy for conversion into other forms when required by a user system. Many flywheel devices are known in the prior art which comprise a fixed stator having coils mounted on a core and a rotating flywheel mounted on bearings. During use, the flywheel is accelerated by the stator acting as a motor to store energy in the rotor as kinetic energy of the rotor. When energy is to be withdrawn from the apparatus, the stator and rotor act as a generator (or dynamo) to convert the kinetic energy back into electrical energy, thus resulting in deceleration of the flywheel.

Although many different types of stator and rotor arrangement are known, the present applicant has developed an energy storage and conversion apparatus which is a very significant improvement over other known prior art apparatus. An apparatus of this type is described in WO-A-95 02271. In the applicant's apparatus, a stator is located coaxially within a hollow cylindrical/tube shaped rotor with the stator extending along at least a major part of the length of the rotor. The rotor is constructed from fibre reinforced composite material with the reinforcing fibres being preferably glass or carbon fibres. The inner layers of the rotor contain a magnetically permeable powdered material disposed within the matrix of the rotor between the fibres. The material is magnetised into alternate north and south poles by known means and the stator, which has a corresponding pole arrangement, drives the rotor during use to store energy. By virtue of the rotor being light in weight yet extremely strong, it can be accelerated up to very high speeds to store significant amounts of energy, because the energy stored is proportional to the speed of the rotor squared.

In an alternative design of rotor, the rotor may be constructed purely from fibre reinforced composite material without any magnetically permeable material deposited in the matrix. In such an arrangement, the inner face of the rotor is lined with magnets which interact with the stator during use to enable the rotor to be accelerated.

Whatever arrangement is used, the drive mechanism is the same. Flux produced by the coils of the stator exit from the stator through the pole faces of the core to cross the air/vacuum gap between the stator and the rotor before entering the rotor magnets/magnetic material. The flux lines in the rotor pass between a north pole and an adjacent south pole before recrossing the air/vacuum gap into an opposite pole of the stator. The flux path therefore describes a complete circuit linking the rotor and the stator. The number of complete circuits made at any one time is dependent upon the number of poles employed in the design of the stator and rotor. Further, these may be arranged in a known manner in any suitable configuration. In any event, by switching the input to the stator coils, the stator pole polarities can be arranged to drive the rotor around the stator.

An integral part of any energy storage and conversion apparatus is the containment. The containment is the housing which completely encloses the flywheel (or rotor), the stator and the other internal components of the system. It is usually constructed of mechanically strong material, such as steel or aluminium, to enable it to contain safely flywheel debris in the event of a flywheel failure at high speed. It is usually built to vacuum standard to enable the operating space to be evacuated so that the flywheel can operate in a high vacuum, thereby reducing windage losses in the apparatus. Further, in order to reduce the overall dimensions of the apparatus and to ensure minimum weight, the containment is constructed as small as possible whilst still fulfilling its function.

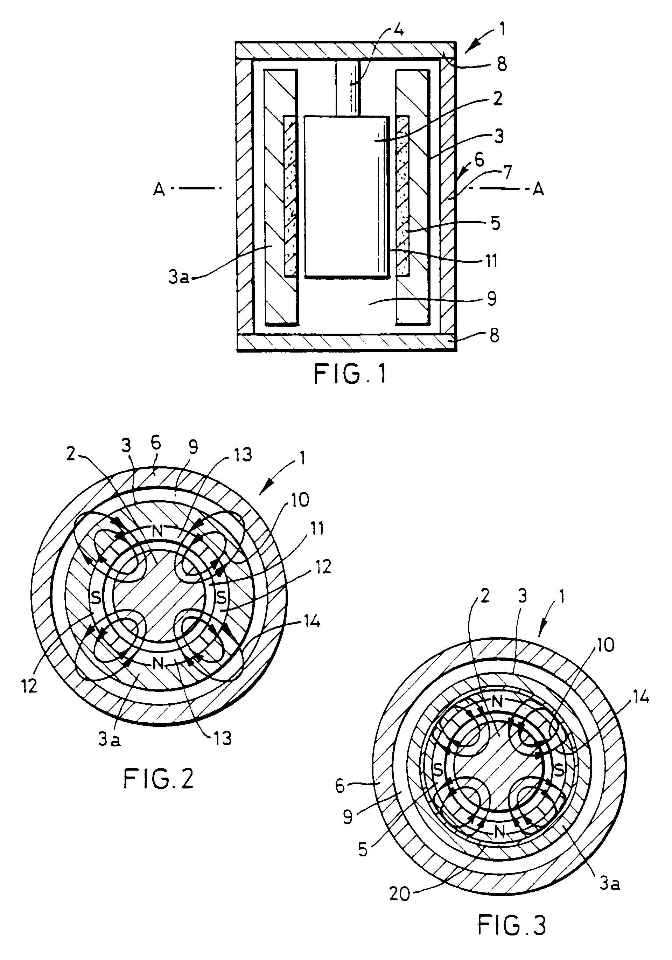

In the case of the present applicant's energy storage and conversion apparatus, the containment takes the form of a thick walled aluminium tube which surrounds the rotor along its length and is enclosed at each end by a flange as shown in Figure 1.

For the reasons previously stated, the containment is arranged as close to the rotor as is convenient, with only a minimum gap. Unfortunately, a problem occurs with such an arrangement which has a negative effect on the efficiency of the energy storage and conversion apparatus. The problem is caused by the proximity of the metallic substance of the containment to the rotor magnets. As mentioned above, the flux path between magnets of the rotor extend from the north poles to adjacent south poles. The flux will find the path of least resistance to achieve this aim. Hence, if the containment is constructed from magnetically permeable material, such as a magnetic steel, which provides an easier path than that provided by the composite material of the rotor for the flux to follow, the magnetic flux field will be drawn towards the containment. Even if a non-magnetic material, such as aluminium, is used for the containment, some of the flux will leak from the outer surface of the rotor and pass into the containment causing eddy current losses to occur (cf. Figure 2). These losses can be quite high and may account for a significant proportion of the total idling losses in the energy storage and conversion apparatus.

The loss of energy caused by the flux path entering the containment is wasteful, thereby reducing the overall efficiency of the energy storage and conversion apparatus. Although the problem may be reduced or eliminated by a number of counter methods, these tend to have disadvantages which make each method unattractive. For example, the containment size may be increased to increase distance between the rotor and the containment. This option results in an increase in the physical size and weight of the apparatus which is clearly not desirable. As another possibility, the containment may be made from a non-metallic material. Although this is a good solution, it reduces significantly the material choice options open to the designer of the energy storage and conversion apparatus, and may result in an increase in material costs over the more commonly used metallic materials.

In the light of the foregoing, the present invention aims to provide an arrangement which avoids energy losses due to the flux path between the stator and the rotor entering the containment of the energy storage and conversion apparatus.

United States patent US-A-3 683 216 discloses an energy storage and conversion apparatus comprising a stator and an outer rotor disposed within a containment defining a vacuum chamber. The rotor comprises a hub of high strength material, such as carbon fibre-epoxy composite, spokes and a rim. The hub is provided with a cylindrical magnetic shunt, which may be fabricated from a solid piece of magnetically soft iron. This shunt will not have the effect of substantially preventing rotor flux from interacting with the containment in the apparatus of US-A-3 683 216, as the containment is spaced apart radially from the rotor hub.

According to the present invention there is provided an energy storage and conversion apparatus comprising a containment defining a vacuum chamber, a stator within the chamber and a fibre reinforced composite material rotor around the stator which, in use, is driven by the stator to store energy as kinetic energy of the rotor and acts with the stator as a generator to release energy, characterised in that the rotor includes a flux shield to reduce energy losses occurring due to flux in the rotor interacting with the containment during use, the flux shield taking the form of a coating on some of the reinforcing fibres present in the rotor. As a result, the flux passing between the stator and the rotor does not extend through the rotor into the containment.

Preferably the flux shield is formed within the rotor.

The reinforcing fibres are preferably carbon or glass fibre wound into the body of the rotor.

The coating is preferably a magnetically permeable material, such as nickel. Any other appropriate magnetically permeable coating material could, of course, alternatively be used.

The rotor may include magnetic material within the inner layers of the resin matrix, or be lined with magnets on its inner face. In either case the flux shield is formed outside the magnetic material.

The rotor is preferably cylindrical and the flux shield preferably forms a circumferential layer around the magnetic material and extends the full length of the rotor. Further, the rotor is preferably longer than the stator.

It will be appreciated that other methods of providing a flux shield within the rotor may be proffered, however the method presented has the following advantages:
(a) The flux shield layer may be wound into the rotor, in the same manner, using the same equipment, as the general body of the rotor.
(b) The flux shield layer is constructed from fibres at least as strong as the fibres in the body of the rotor.
(c) A weak boundary is not introduced into the rotor construction by the introduction of coated fibres as might be the case with a mono-layered flux shield.

The present invention further provides a method of producing a rotor for an energy storage and conversion apparatus, comprising the steps of:
(a) winding layers of reinforcing fibres coated with resin onto a mandrel, with magnetic filler material being disposed in the matrix, within and between the layers, and
(b) winding a layer of reinforcing fibres coated with a magnetically permeable material and resin over the first part of the winding (a) to form a flux shield, and
(c) winding a layer of reinforcing fibres coated with resin over the flux shield layer (b) to reinforce that layer and form the body of the rotor.

Or, if magnets are used:
(a) constructing an arrangement of magnets around a mandrel,
(b) winding a layer of reinforcing fibres coated with magnetically permeable material and resin over the magnet arrangement (a) to form a flux shield, and
(c) winding a layer of reinforcing fibres coated with resin over the flux shield layer (b) to reinforce and form the body of the rotor.

In both methods above, layer (c) is optional and may be applied either after the flux shield layer (b) as described, or after step (a) and before the flux shield layer (b), or in two layers either side of the flux shield layer, or it may not be applied at all and the body of the rotor may consist entirely of layer (a) and the flux shield layer (b).

A specific embodiment of the present invention is now described, by way of example only, with reference to the accompanying drawings, in which:-
Figure 1 is a sectional side view of an energy storage and conversion apparatus showing the relationship between the stator, rotor, magnetic material in the rotor and containment;
Figure 2 is a section on the line A-A of Figure 1 without the inclusion of a flux shield according to the present invention; and
Figure 3 is a section on the line A-A of Figure 1 showing the inclusion of a flux shield according to the present invention.

With reference to Figure 1 of the drawings, an energy storage and conversion apparatus 1 comprises a cylindrical stator 2 mounted coaxially within a cylindrical rotor 3. The stator 2 is suspended via a support rod 4 through which electrical connections (not shown) control the current applied to the coils (not shown) of the stator 2.

The rotor 3 is formed from fibre reinforced composite material wound during manufacture about a mandrel. The reinforcing fibres are carbon fibres and/or glass fibres, and are embedded in a resin matrix. During the winding of the rotor 3, powdered magnetic material is entered into the resin mix to produce a layer of magnetic material 5 surrounding the immediate vicinity of the stator 2. The depth of the magnetic material 5 is determined by the particular characteristics of the stator 2 and rotor 3 and may vary from embodiment to embodiment. In another embodiment, as mentioned above, the magnetic material 5 may alternatively be replaced by an arrangement of magnets.

The stator 2 and rotor 3 are encased in a containment 6 which comprises a cylindrical tube 7 and end flanges 8 for closing the ends of the tube 7. The containment is formed from metal, preferably steel or aluminium, and defines a vacuum chamber 9 in which the rotor 3 spins, during use.

The rotor 3 is supported about the stator 2 by means of bearings (not shown), which may be permanent magnet bearings, electromagnet bearings, pin bearings or any other appropriate bearings.

The magnetic material 5 of the rotor 3 is magnetised during manufacture to define alternate distinct north and south poles around the inside of the rotor 3. If magnets are used instead of powdered magnetic material, the magnets are simply positioned to define the correct pole arrangements. Although only two pairs of north and south poles are shown in Figures 2 and 3, the number of pole sets may vary and will depend on the particular configuration required in a specific embodiment.

During use, the coils of the stator 2 are energised to produce magnetic flux 10 which passes from pole faces (not shown) of the stator 2 across an air/vacuum gap 11 between the stator 2 and the rotor 3 and through the south pole 12 of the magnetic material 5 of the rotor 3. The flux path then continues around in a loop to enter an adjacent north pole 13 before passing back across the air gap 11 and into the core (not shown) of the stator 2. Hence, depending upon the switching of the current supply to the coils of the stator 2, a magnetic flux 10 produced by the stator 2 can be used to drive the rotor 3 about the stator to store energy in the rotor 3 as kinetic energy of the rotor 3.

As will be noted from Figure 2, an outer flux line 14 is shown leaving the outside of the rotor 3, crossing the air/vacuum gap 9 and entering the containment 6. This is particularly likely to happen if the containment 6 offers a flux path which has a lower resistance than that of the fibre reinforced composite material 3a of the rotor 3. However, if the flux 10 does pass into the containment 6, a braking effect on the rotor 3 will result mainly due to eddy currents being formed in the containment 6. Energy is thereby wasted, thus reducing the efficiency of the energy storage and conversion apparatus 1.

Turning now to Figure 3 of the drawings, an energy storage and conversion apparatus 1 according to the present invention is shown. In this drawing, the same reference numerals have been used for components which correspond to those shown in Figure 2. In Figure 3, however, it will be noted that a flux shield 20 has been included outside the magnetic material 5 of the rotor 3 but within the body of the rotor 3. This flux shield 20 is formed by means of a nickel coating on some of the carbon and/or glass fibres used during the winding of the rotor 3. By including the nickel coating, a flux path of low resistance is provided within the rotor 3 which attracts the magnetic flux 10,14 such that the flux 10,14 does not pass through the rotor 3 and cross the air/vacuum gap 9 into the containment 6. Hence, no forces act between the rotor 3 and the containment 6, thereby removing the source of energy loss associated with the embodiment of Figure 2.

Although the flux shield 20 has been shown formed within the rotor 3, in theory it could be formed on the outside of the rotor 3. Further, the flux shield 20 is shown as being continuous around the rotor 3, but it could in theory be intermittent and still achieve the same function. In any event, it will be appreciated that the flux shield 20 extends along the length of the rotor 3 at least in the vicinity of the magnetic material 5. It is, however, preferable for the flux shield 20 to extend the full length of the rotor 3 and, indeed, this arrangement is probably simpler to manufacture.

It will of course be understood that the present invention has been described above purely by way of example, and that modifications of detail can be made within the scope of the appended claims.

## Claims

1. An energy storage and conversion apparatus comprising a containment (6) defining a vacuum chamber, a stator (2) within the chamber and a fibre reinforced composite material rotor (3) around the stator which, in use, is driven by the stator to store energy as kinetic energy of the rotor and acts with the stator as a generator to release energy, characterised in that the rotor includes a flux shield (20) to reduce energy losses occurring due to flux (10, 14) in the rotor interacting with the containment (6) during use, the flux shield taking the form of a coating on some of the reinforcing fibres present in the rotor.

2. An apparatus as claimed in claim 1, wherein the flux shield is formed within the rotor.

3. An apparatus as claimed in claim 1 or claim 2, wherein the coating is a magnetically permeable material.

4. An apparatus as claimed in claim 3, wherein the coating is nickel.

5. An apparatus as claimed in any preceding claim, wherein the rotor is formed of carbon and/or glass fibres wound in a resin matrix.

6. An apparatus as claimed in claim 5, wherein the rotor (3) includes magnetic material (5) within the resin matrix or solid magnets, the flux shield being formed outside the magnetic material or magnets.

7. An apparatus as claimed in any preceding claim, wherein the rotor is cylindrical and the flux shield extends the full length of the rotor.

8. An apparatus as claimed in any preceding claim, wherein the rotor is longer than the stator.

9. A method of producing a rotor for an energy storage and conversion apparatus, comprising the steps of:
(a) winding reinforcing fibres in a resin matrix on a mandrel;
(b) entering powdered magnetic material into the matrix during a first part of the winding; and
(c) coating the fibres with a magnetically permeable material during a second part of the winding.

10. A method of producing a rotor for an energy storage and conversion apparatus, comprising the steps of:
(a) arranging a plurality of magnets around a mandrel; and
(b) winding reinforcing fibres in a resin matrix on the mandrel to overlay the magnets;
wherein at least some of the fibres are coated with a magnetically permeable material to define a flux shield layer around the magnets.

## Patentansprüche

1. Vorrichtung zum Speichern und Umwandeln von Energie, umfassend: ein Containment bzw. eine Sicherheitshülle (6), das bzw. die eine Vakuumkammer bildet, einen Stator (2) innerhalb der Kammer und einen faserverstärkten Rotor (3) aus Verbundmaterial um den Stator herum, der im Betrieb durch den Stator angetrieben ist, um Energie als kinetische Energie des Rotors zu speichern und mit dem Stator als Generator zur Freigabe von Energie zusammenwirkt, dadurch gekennzeichnet, daß der Rotor ein Flußschild (20) umfaßt, um Energieverluste zu reduzieren, die aufgrund von Fluß (10,14) im Rotor, der mit der Sicherheitshülle (6) im Betrieb in Wechselwirkung steht, auftreten, wobei das Flußschild die Form eines Überzugs auf einigen der im Rotor vorhandenen Verstärkungsfasern annimmt.

2. Vorrichtung nach Anspruch 1, wobei das Flußschild innerhalb des Rotors ausgebildet ist.

3. Vorrichtung nach Anspruch 1 oder 2, wobei der Überzug ein magnetisch permeables Material ist.

4. Vorrichtung nach Anspruch 3, wobei der Überzug aus Nickel besteht.

5. Vorrichtung nach einem der vorhergehenden Ansprüche, wobei der Rotor aus Kohlenstoff- und/oder Glasfasern, die in einer Harzmatrix gewickelt sind, gebildet ist.

6. Vorrichtung nach Anspruch 5, wobei der Rotor (3) ein magnetisches Material (5) innerhalb der Harzmatrix oder feste Magneten umfaßt, wobei das Flußschild außerhalb des magnetischen Materials oder der Magneten gebildet ist.

7. Vorrichtung nach einem der vorhergehenden Ansprüche, wobei der Rotor zylindrisch ist und das Flußschild sich über die volle Länge des Rotors erstreckt.

8. Vorrichtung nach einem der vorhergehenden Ansprüche, wobei der Rotor länger als der Stator ist.

9. Verfahren zur Erzeugung eines Rotors für eine Vorrichtung zur Energiespeicherung und -umwandlung, umfassend die nachstehenden Schritte:
(a) Wickeln von Verstärkungsfasern in einer Harzmatrix auf einen Dorn;
(b) Einführen eines pulverförmigen magnetischen Materials in die Matrix während eines ersten Teils des Wickelns; und
(c) Überziehen der Fasern mit einem magnetisch permeablen Material während eines zweiten Teils des Wickelns.

10. Verfahren zur Erzeugung eines Rotors für eine Vorrichtung zur Energiespeicherung und Umwandlung, die nachstehenden Schritte umfassend:
(a) Anordnen einer Vielzahl von Magneten um einen Dorn; und
(b) Wickeln von Verstärkungsfasern in einer Harzmatrix auf den Dorn zur Überlagerung der Magnete;
wobei wenigstens einige der Fasern mit einem magnetisch permeablen Material zur Bildung einer Flußschildschicht um die Magnete überzogen sind.

## Revendications

1. Dispositif de stockage et de transformation d'énergie comprenant une enceinte (6) définissant une chambre sous vide, un stator (2) à l'intérieur de la chambre et un rotor en matériau composite renforcé par des fibres (3) autour du stator qui, en utilisation, est entraîné par le stator afin de stoker de l'énergie sous forme d'énergie cinétique du rotor, et agit avec le stator en tant que génératrice afin de libérer de l'énergie, caractérisé en ce que le rotor comprend un blindage magnétique (20) destiné à réduire les pertes d'énergie apparaissant en raison de l'interaction du flux (10, 14) dans le rotor avec l'enceinte (6) pendant l'utilisation, le blindage magnétique prenant la forme d'un revêtement sur certaines des fibres de renfort présentes dans le rotor.

2. Dispositif selon la revendication 1, dans lequel le blindage magnétique est formé à l'intérieur du rotor.

3. Dispositif selon la revendication 1 ou la revendication 2, dans lequel le revêtement est un matériau magnétiquement perméable.

4. Dispositif selon la revendication 3, dans lequel le revêtement est en nickel.

5. Dispositif selon l'une quelconque des revendications précédentes, dans lequel le rotor est formé de fibres de carbone et/ou de verre enroulées dans une matrice de résine.

6. Dispositif selon la revendication 5, dans lequel le rotor (3) comprend du matériau magnétique (5) à l'intérieur de la matrice de résine, ou bien des aimants massifs, le blindage magnétique étant formé à l'extérieur du matériau magnétique ou des aimants.

7. Dispositif selon l'une quelconque des revendications précédentes, dans lequel le rotor est cylindrique et le blindage magnétique s'étend sur toute la longueur du rotor.

8. Dispositif selon l'une quelconque des revendications précédentes, dans lequel le rotor est plus long que le stator.

9. Procédé de fabrication d'un rotor destiné à un dispositif de stockage et de transformation d'énergie, comprenant les étapes consistant à :
(a) enrouler des fibres de renfort dans une matrice de résine sur un mandrin,
(b) introduire du matériau magnétique en poudre dans la matrice pendant une première partie de l'enroulement, et
(c) revêtir les fibres d'un matériau perméable magnétiquement pendant une seconde partie de l'enroulement.

10. Procédé de fabrication d'un rotor destiné à un dispositif de stockage et de transformation d'énergie, comprenant les étapes consistant à :
(a) agencer une pluralité d'aimants autour d'un mandrin, et
(b) enrouler des fibres de renfort dans une matrice de résine sur le mandrin de façon à recouvrir les aimants,
dans lequel au moins certaines des fibres sont revêtues d'un matériau perméable magnétiquement afin de définir une couche de blindage magnétique autour des aimants.
